# EUROPÄISCHE PATENTSCHRIFT

(11) **EP 0 677 715 B1**
(45) Veröffentlichungstag und Bekanntmachung des Hinweises auf die Patenterteilung: **23.06.1999**
(21) Anmeldenummer: 95105276.0
(22) Anmeldetag: 07.04.1995
(51) Int. Cl.: F28D 1/03, F28F 3/02

(54) **Wärmetauscher zum Kühlen von Abgas eines Kraftfahrzeugmotors**
Heat exchanger for cooling of the exhaust gas from an automotive engine
Exchangeur de chaleur pour le refroidissement du gaz d'échappement d'un moteur de véhicule automobile

(30) Priorität: 14.04.1994 DE 9406197 U
(43) Veröffentlichungstag der Anmeldung: 18.10.1995
(73) Patentinhaber: Behr GmbH & Co., 70469 Stuttgart (DE)
(72) Erfinder: Karbach, Thomas, Dipl.-Ing. (TH), D-70435 Stuttgart (DE); Pfender, Conrad, Dr.-Ing., D-74354 Besigheim (DE); Zwittig, Eberhard, D-73269 Hochdorf (DE)
(74) Vertreter: Wilhelm & Dauster Patentanwälte European Patent Attorneys

(56) Entgegenhaltungen:
- EP-A- 0 234 942
- DE-A- 3 739 619
- US-A- 3 363 682
- US-A- 4 234 040

## Beschreibung

Die Erfindung betrifft einen Abgaswärmetauscher zum Kühlen von Abgas eines Kraftfahrzeugmotors mit einer geschlossenen Strömungsführung für das Abgas aus zwischen einer Zuführung und einer Abführung für das Abgas angeordneten, scheibenförmigen Wärmetauschelementen, die von einem Kühlmedium umströmt sind und die jeweils aus zwei Blechen zusammengefügt sind, zwischen denen wenigstens eine Turbulenzeinlage angeordnet ist.

Bei einem solchen bekannten Abgaswärmetauscher (US-4-234 040), der allerdings nur ein scheibenförmiges Wärmetauschelement zeigt, ist eine Turbulenzeinlage vorgesehen, die das Wärmetauscherelement in eine Vielzahl paralleler Strömungskanäle unterteilt, die sich zwischen einer Eintrittssammelkammer und einer Austrittssammelkammer erstrecken. Bei Abgaswärmetauschern besteht das Problem, daß das Abgas mehr oder weniger feste Partikel mit sich führt, so daß die Gefahr besteht, daß diese Partikel sich innerhalb des Wärmetauschelementes ablagern und dies mit der Zeit verstopfen.

Bei anderen Wärmetauschern, insbesondere bei Verdampfern oder Ölkühlern, tritt dieses Problem nicht auf, da das zu kühlende Medium normalerweise keine Partikel mit sich führt.

Bei einem als Verdampfer oder Ölkühler einzusetzenden Wärmetauscher (EP-A-234 942) ist es bekannt, innerhalb der scheibenförmigen Wärmetauschelemente Turbulenzeinlagen vorzusehen, aus denen Vorsprünge herausgeprägt sind, die sich jeweils bis zur gegenüberliegenden Wandfläche des Wärmetauschelementes erstrecken. Diese Vorsprünge sind in quer zur Strömungsrichtung des Wärmetauschmediums verlaufenden Reihen angeordnet. Die Turbulenzeinlage ist mit zueinander parallelen und zur Strömungsrichtung schräg verlaufenden Schlitzen versehen, die das Herausprägen der Vorsprünge gestatten. Die Vorsprünge einer Reihe sind abwechselnd nach oben und unten ausgeprägt, so daß das Wärmetauschmedium zickzackförmig strömt.

Bei als Ölkühler dienenden Wärmetauschern mit scheibenförmigen Wärmetauschelementen (DE-A-29 24 441, DE-A 36 08 232) ist es bekannt, die Strömung des innerhalb der scheibenförmigen Wärmetauschelemente strömenden Öls dadurch zu beeinflussen, daß die Blechschalen mit rippenartigen Einprägungen versehen sind.

Es war auch bekannt (DE-A 37 39 619) an Lamellen eines Wärmetauschers schräg zur Strömungsrichtung gerichtete Laschen vorzusehen, die jeweils von einer Fläche der Lamelle aufragen. Diese Laschen erzeugen sogenannte Tütenwirbel. Dabei ist es auch bekannt, die Laschen paarweise anzuordnen, wobei die beiden Laschen eines Paares in Strömungsrichtung auseinanderlaufen.

Der Erfindung liegt die Aufgabe zugrunde, einen Wärmeaustauscher der eingangs genannten Art zu schaffen, der gegen ein Verstopfen durch von dem Abgas mitgeführte Schmutzstoffe weitgehend unempfindlich ist.

Diese Aufgabe wird dadurch gelöst, daß die Turbulenzeinlage schräg zur Strömungsrichtung des Abgases verlaufende, von einem Blech des Wärmetauschelementes aufragende Laschen bildet, die in Abstand von dem gegenüberliegenden Blech des Wärmetauschelementes enden, die paarweise angeordnet sind und die in Strömungsrichtung des Abgases auseinanderlaufen.

Die bei dem erfindungsgemäßen Abgaswärmetauscher vorgesehenen Laschen sorgen dafür, daß Grenzschichten des Abgases ständig aufgebrochen werden, wobei Längswirbel erzeugt werden, die das Abgas ständig durchmischen. Auf diese Weise wird eine relativ geringe Verschmutzungsanfälligkeit erzielt, da der Strömungsquerschnitt nicht wesentlich verringert wird. Selbst bei teilweiser Verschmutzung bleibt aufgrund dieser Laschen der Druckabfall des Abgases innerhalb des Abgaswärmetauschers nahezu konstant.

In weiterer Ausgestaltung der Erfindung ist als Turbulenzeinlage ein quer zur Strömungsrichtung etwa mäanderförmig gebogenes Blech vorgesehen, das das scheibenförmige Wärmetauscherelement in mehrere in Strömungsrichtung verlaufende Kanäle unterteilt. In zweckmäßiger Ausgestaltung wird dabei vorgesehen, daß die Laschen jeweils aus einer an einer der Blechschale anliegenden Fläche aufgestellt sind. Dadurch wird der Druckverlust in den scheibenförmigen Wärmetauschelementen auf ein Minimum beschränkt. Die Laschen können auch wechselweise oben und unten im Kanal vorgesehen sein.

In weiterer Ausgestaltung der Erfindung sind zwischen den benachbarten scheibenförmigen Wärmetauschelementen Wellrippen oder Stegrippen angeordnet. Um auch hier den Wärmeaustausch zu verbessern, wird weiter vorgesehen, daß die Wellrippen oder Stegrippen mit aufgestellten, schräg zur Strömungsrichtung ausgerichteten Laschen versehen sind.

In weiterer Ausgestaltung der Erfindung wird vorgesehen, daß die scheibenförmigen Wärmetauschelemente jeweils zwei parallele Bleche aufweisen, deren Ränder mittels Randleisten auf Abstand gehalten sind und die zwischen sich jeweils eine Turbulenzeinlage aufnehmen. In weiterer Ausgestaltung dieser Ausführungsform wird vorgesehen, daß zwischen den scheibenförmigen Wärmetauschelementen jeweils eine Platte angeordnet ist, die mit im wesentlichen parallel zueinander verlaufenden, streifenförmigen Aussparungen versehen ist, die mit den Blechen der Wärmetauschelementen Führungskanäle für ein flüssiges Kühlmedium bilden. Ein derartiger Wärmetauscher läßt sich noch wesentlich kompakter als ein mit Luft gekühlter Wärmetauscher ausbilden. Die Bleche können mit Noppen versehen sein, so daß beim Zusammenbau der Bleche ein Kanal entsteht, dessen Höhe durch die Noppen bestimmt wird. Die Noppen verbessern auch den Wärmeübergang.

Weitere Merkmale und Vorteile der Erfindung ergeben sich aus der nachfolgenden Beschreibung der in der Zeichnung dargestellten Ausführungsbeispiele.
- Fig. 1: zeigt eine Ansicht eines erfindungsgemäßen Wärmetauschers, gesehen in Anströmrichtung von den Wärmetauscher anströmender Luft,
- Fig. 2: einen Schnitt entlang der Linie II-II der Fig. 1,
- Fig. 3: eine Draufsicht auf eine Einzelheit einer Turbulenzeinlage eines scheibenförmigen Wärmetauschelementes des Wärmetauschers nach Fig. 1 und 2 in größerem Maßstab,
- Fig. 4: eine Draufsicht auf einen mit flüssigem Kühlmittel, insbesondere mit dem Kühlmittel des Verbrennungsmotors gekühlten Abgaswärmetauscher,
- Fig. 5: einen Teilschnitt entlang der Linie V-V der Fig. 4,
- Fig. 6: eine Draufsicht auf einen Ausschnitt einer Turbulenzeinlage und
- Fig. 7: eine Draufsicht auf einen Ausschnitt einer zur Kühlmittelführung bestimmten Platte des Wärmetauschers nach Fig. 5.

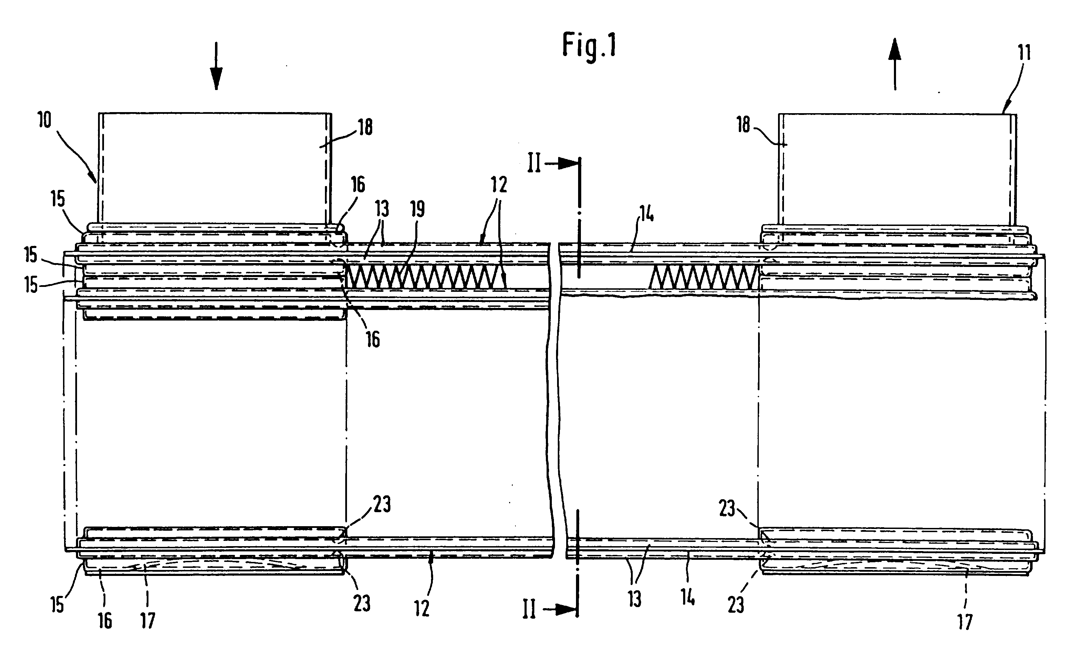

Der in Fig. 1 bis 3 dargestellte Wärmetauscher dient zum Kühlen eines heißen Abgases des Verbrennungsmotors eines Kraftfahrzeuges mittels Umgebungsluft, die insbesondere als Fahrtwind den Wärmetauscher umströmt. Das Abgas wird zwischen einer Zuführung (10) und einer Abführung (11) in einer geschlossenen Strömungsführung geführt. Die geschlossene Strömungsführung besitzt eine Vielzahl von paketartig geschichteten scheibenförmigen Wärmetauschelementen (12). Die scheibenförmigen Wärmetauschelemente (12) weisen jeweils zwei geprägte Blechschalen (13) auf, die spiegelbildlich zusammengefügt sind und jeweils eine Führung für das Abgas bilden. Die im wesentlichen U-förmig profilierten Blechschalen (13) weisen jeweils einen umlaufenden Randflansch (14) auf, an welchem sie miteinander verbunden sind. In ihren Endbereichen sind die Blechschalen (13) mit topfartigen Vertiefungen (15) versehen, deren Bodenbereich bis auf einen umlaufenden Randsteg (16) ausgespart ist. Mit diesen umlaufenden Randstegen (16) liegen die topfartigen Vertiefungen (15) aneinander, so daß im Bereich der Zuführung (10) ein Zuführkanal zu den einzelnen Wärmetauschelementen und im Bereich der Abführung (11) ein Abführkanal gebildet werden. Die der Zuführung und der Abführung abgewandte, äußerste Blechschale (13) ist im Bereich der Vertiefungen (15) mittels an den Randstegen (16) anliegenden gewölbten Deckeln (17) verschlossen. Auf der Seite der Zuführung (10) und der Abführung (11) ist an die jeweils erste Schale (13) ein Anschlußstutzen (18) angesetzt.

Aufgrund der topfförmigen Vertiefungen (15) sind die Wärmetauschelemente (12) in einem Abstand zueinander angeordnet. In diesem Bereich ist zwischen die Wärmetauschelemente (12) eine Wellrippe (19) eingebracht.

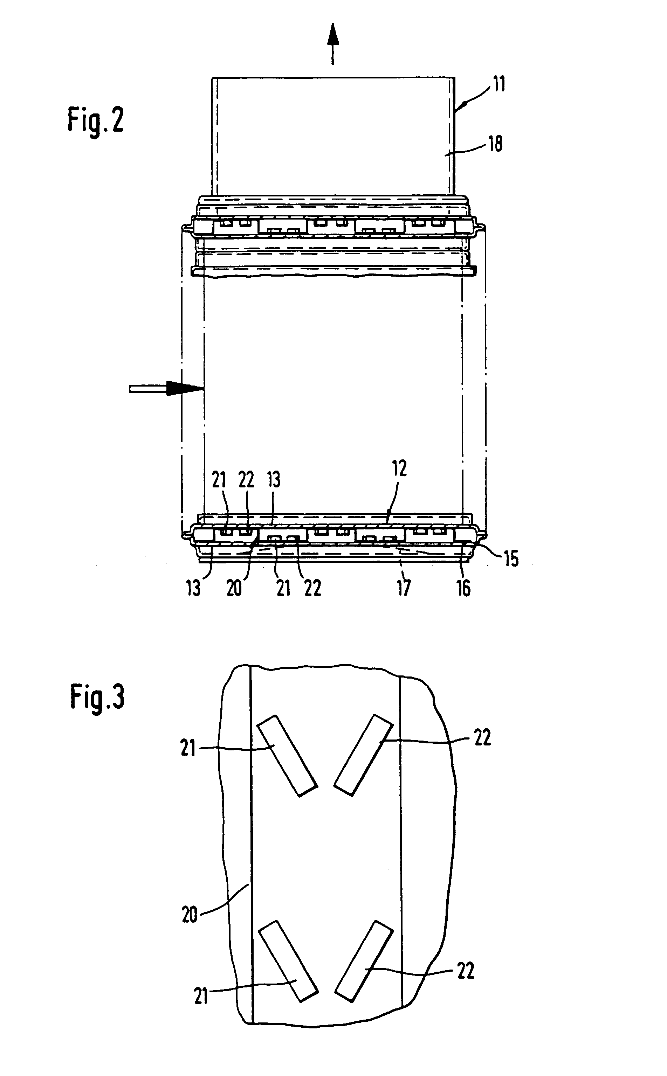

In dem mittleren Bereich der scheibenförmigen Wärmetauschelemente ist innen eine Turbulenzeinlage (20) angeordnet (Fig. 2), die aus einem mäanderförmig gebogenen Blech gebildet ist, das die Wärmetauschelemente in jeweils etwa rechteckige Kanäle unterteilt, die in Strömungsrichtung des Abgases verlaufen. Die Turbulenzeinlage (20) ist jeweils an den an einer Blechschale (13) anliegenden Flächen mit paarweise aufgestellten Laschen (21, 22) versehen, deren Höhe sich etwa über die Hälfte der Höhe der einzelnen Kanäle erstreckt. Die paarweise aufgestellten Laschen (21, 22) sind mit einem Winkel von etwa 15° bis 40° schräg zur Strömungsrichtung angestellt. Jede dieser Laschen (21, 22) erzeugt einen tütenartigen Längswirbel, durch welchen die Grenzschichten aufgebrochen werden, so daß eine gute Durchmischung des Abgases erhalten wird, ohne daß ein allzu hoher Druckverlust auftritt. Die beiden Laschen (21, 22), die eine rechteckige oder dreieckige oder trapezförmige Gestalt aufweisen und die sich bis auf einen Bereich von etwa 1,2mm annähern, laufen danach diffusorartig auseinander. Bei dem dargestellten Ausführungsbeispiel sind die Laschen (21, 22), deren Höhe etwa dem 0,2-fachen bis etwa dem 0,6-fachen der Kanalhöhe und deren Länge etwa dem 2-fachen der Kanalhöhe entspricht, spiegelsymmetrisch zur Strömungsrichtung angeordnet. Bei einem abgewandelten Ausführungsbeispiel sind die Laschen (21, 22) in Strömungsrichtung versetzt zueinander angeordnet.

Die Turbulenzeinlagen (20) erstrecken sich nur über den mittleren Bereich der scheibenförmigen Wärmetauschelemente (12). Ihre Position ist mittels nach innen gerichteter Einprägungen (23) der Blechschalen (13) fixiert.

Die Blechschalen (13), die Deckel (17) und die Anschlußstutzen (18) sind aus einem rostfreien Edelstahl hergestellt. Die Wellrippen (19) sind aus dem gleichen Material hergestellt. Ebenso können die Turbulenzeinlagen (20) aus dem gleichen Material hergestellt sein, jedoch ist es auch möglich, für diese ein anderes Material zu wählen. Nach dem Paketieren wird der zusammengefügte Wärmetauscher hartgelötet

Bei einer abgewandelten Ausführungsform werden auch die Wellrippen (19) mit ausgestellten Laschen versehen, die eine ähnliche Anordnung wie die Laschen (21, 22) der Turbulenzeinlagen aufweisen. Dabei können diese Laschen der Wellrippen (19) auch eine dreieckförmige Fläche aufweisen. Bei einer abgewandelten Ausführungsform werden anstelle von Wellrippen (19) sogenannte Stegrippen vorgesehen, die in ähnlicher Weise rechtwinklig gekantet sind, wie die Turbulenzeinlagen. Diese Stegrippen sind dann, ähnlich wie die Turbulenzeinlagen, in ihren jeweils an den Blechschalen (13) der Wärmetauschelemente (12) anliegenden Flächen mit aufgestellten Laschen versehen, die die Form der Laschen (21, 22) aufweisen.

Bei dem dargestellten Ausführungsbeispiel dient als Kühlmedium Luft, die die Wärmetauschelemente (12) außen umströmt. Bei einem abgewandelten Ausführungsbeispiel wird als Kühlmedium eine Kühlflüssigkeit vorgesehen, insbesondere Wasser mit einem Frostschutzmittel. In diesem Fall wird das Paket aus den Wärmetauschelementen mit einem Gehäuse umgeben, das einen Zulauf und einen Ablauf für das Kühlmedium aufweist.

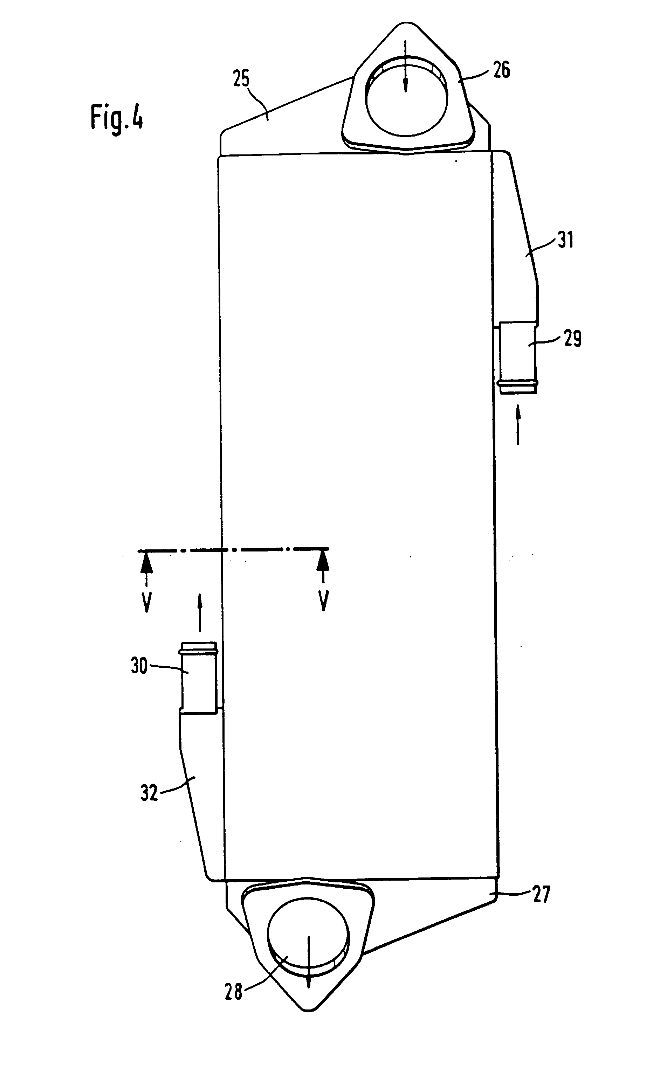

Der in Fig. 4 dargestellte Wärmetauscher zum Kühlen von Abgas besitzt eine quaderförmige, langgestreckte Gestalt. Er ist an einer Stirnseite mit einem Verteilkasten (25) versehen, der mit einem Zuführanschluß (26) für eine Abgasleitung ausgerüstet ist. Auf der gegenüberliegenden Stirnseite befindet sich ein Sammelkasten (27), der mit einem Abführanschluß (28) versehen ist. Der Wärmetauscher besitzt eine geschlossene Strömungsführung für das Abgas. Ferner besitzt der Wärmetauscher eine geschlossene Strömungsführung für ein flüssiges Kühlmittel, insbesondere die Kühlflüssigkeit eines zugehörigen Verbrennungsmotors. Auf gegenüberliegenden Seiten sind ein Anschluß (29) für die Zuführung und ein Anschluß (30) für die Abführung des flüssigen Kühlmediums vorgesehen. Der Schlauchanschluß (29), der sich im Bereich des Zuführanschlusses (26) befindet, ist mit einem Verteilkasten (31) versehen, der sich über die gesamte Höhe des Wärmetauschers erstreckt. In entsprechender Weise ist der Schlauchanschluß (30), der sich im Bereich des Austrittsanschlusses (28) befindet, mit einem Sammelkasten (32) versehen. Das Abgas und das Kühlmedium strömen in den Wärmetauscher im Gleichstrom.

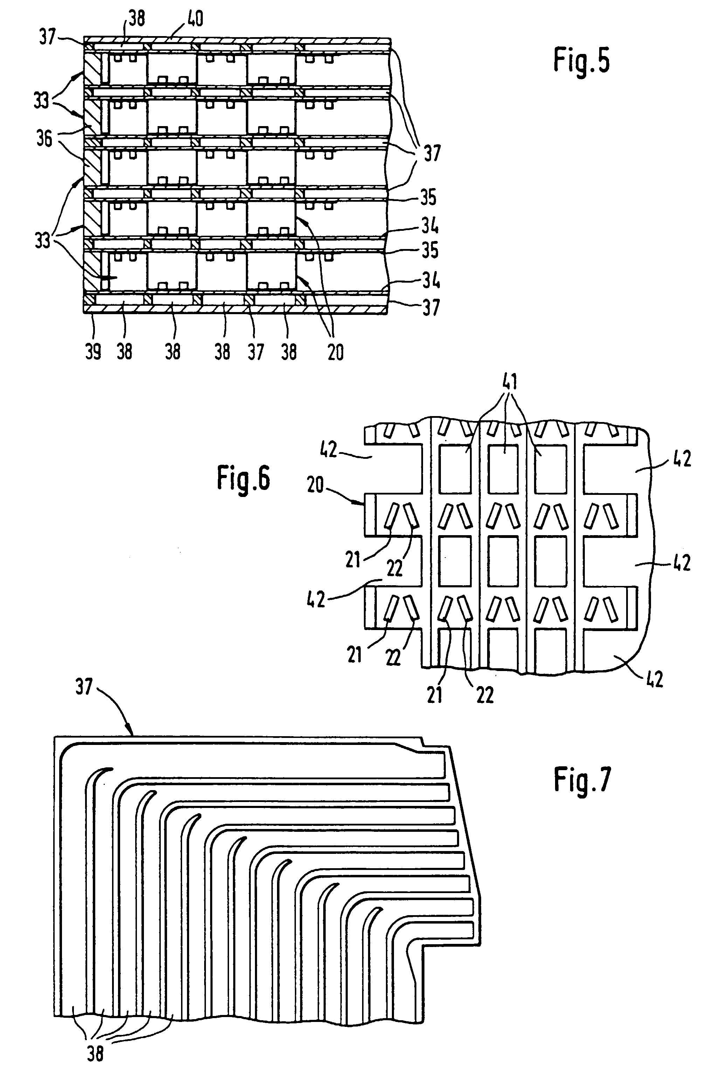

Wie aus Fig. 5 zu ersehen ist, besitzt der Wärmetauscher mehrere scheibenförmige Wärmetauschelemente (33), die an den Stirnseiten zu dem Verteilkasten (25) und zu dem Sammelkasten (27) offen sind. Die scheibenförmigen Wärmetauschelemente (33) sind jeweils aus zwei dünnen Blechplatten (34, 35) zusammengefügt, zwischen denen im Bereich der Seitenwände des Wärmetauschers Randleisten (36) angeordnet sind. Zwischen den Blechen (34, 35) der benachbarten Wärmetauschelemente (33) ist jeweils eine Platte (37) angeordnet, die mit in Längsrichtung verlaufenden, parallelen Ausnehmungen (38) versehen ist, wie auch aus Fig. 7 zu entnehmen ist. Die Ausnehmungen (38) sind jeweils im Bereich der Stirnenden nach außen abgewinkelt und ragen in den Verteilkasten (31) und den Sammelkasten (32) der Schlauchanschlüsse (29) oder (30) hinein. Die jeweils äußersten Wärmetauschelemente (33) sind auch außen mit einer Platte (37) versehen, die ihrerseits mit einer Abdeckplatte (39, 40) abgedeckt sind. Die Ausnehmungen (38) bilden somit zusammen mit den Blechen (34, 35) oder mit den äußeren Abdeckplatten (39, 40) in Längsrichtung des Wärmetauschers verlaufende Kanäle, in denen das flüssige Kühlmittel geführt ist. Die Blechplatten (34, 35) können mit Noppen versehen sein, die sich jeweils an die benachbarte Blechplatte (34, 35) anlegen.

In den scheibenförmigen Wärmetauschelementen sind Turbulenzeinlagen (20) angeordnet, die jeweils aus mehreren mäanderförmig gebogenen, sich in Längsrichtung der Wärmetauschelemente (33) erstreckenden Blechstreifen bestehen. Ein Ausschnitt einer derartigen Turbulenzeinlage (20) ist in Fig. 6 dargestellt. Die Turbulenzeinlagen (20) unterteilen die Wärmetauschelemente (33) in parallele Kanäle, die sich von dem Verteilkasten (25) zu dem Sammelkasten (27) erstrecken. Die Turbulenzeinlagen (20) sind mit aufgestellten Laschen (21, 22) versehen, die in etwa V-förmig zueinander angeordnet sind, wobei das V entgegen der Strömungsrichtung des Abgases weist. Wie aus Fig. 5 zu ersehen ist, sind die Laschen (21, 22) jeweils so aufgestellt, daß sie von einer an einem Blech (34 oder 35) anliegenden Fläche nach innen in die jeweiligen Kanäle ragen. Wie aus Fig. 6 zu ersehen ist, sind die Laschen (21, 22) jeweils in einer quer zur Strömungsrichtung verlaufenden Reihe angeordnet. Zwischen diesen Reihen ist die Turbulenzeinlage (20) in den den Blechen (34, 35) zugewandten Flächen mit Aussparungen (41) versehen. Diese Aussparungen (41) beeinflussen somit die Unterteilung in einzelne, in Längsrichtung verlaufende Kanäle nicht, da die die Bleche (34, 35) verbindenden Abschnitte der Turbulenzeinlage (20) geschlossen bleiben. Lediglich im Bereich der beiden Seitenränder sind Aussparungen (42) vorgesehen, die auch zur Seite hin offen sind, d.h. die dort befindliche Wand zwischen den Blechen (34 und 35) unterbrechen. Dadurch ist es möglich, eine Turbulenzeinlage (20) für ein Wärmetauschelement aus mehreren Streifen entsprechend Fig.6 zu bilden, die nebeneinander um eine Teilung versetzt angeordnet sind und in der Art einer Verzahnung ineinandergreifen.

Da das Abgas eines Verbrennungsmotors relativ heiß und aggressiv ist, insbesondere das Abgas eines Dieselmotors, für welchen die Wärmetauscher gemäß der vorliegenden Erfindung vorwiegend bestimmt sind, muß für alle Elemente des Wärmetauschers ein Werkstoff vorgesehen werden, der diesen aggressiven Bedingungen standhält. Hierbei kommt insbesondere ein hochwertiger Edelstahl in Frage.

Der Wärmetauscher nach Fig. 4 wird in der Weise "paketiert", wie es anhand von Fig. 5 erläutert worden ist. Dabei werden zwischen den einzelnen Elementen Lötfolien insbesondere aus Nickelbasislot angeordnet, so daß der gesamte Wärmetauscher in einem Arbeitsgang in einem Ofen verlötet werden kann. bei einer abgewandelten Ausführungsform ist der Wärmetauscher als eine Schweißkonstruktion ausgebildet.

Der Anstellwinkel der Laschen (21, 22) zur Strömungsrichtung liegt zwischen 10° und 40°. Ihr gegenseitiger Abstand beträgt zwischen 10 mm und 50 mm. Die Höhe der Laschen beträgt zwischen 1 mm und 3 mm bei einer Höhe der Kanäle der Wärmetauschelemente (33) zwischen 3 mm und 10 mm. Die Kanalbreite der einzelnen Kanäle wird zwischen 10 mm und 100 mm gewählt. Bei der größeren Kanalbreite ist es unter Umständen erforderlich, jedem dieser Kanäle mehrere Paare von Laschen (21, 22) nebeneinander zuzuordnen. Es hat sich gezeigt, daß ein Wärmetauscher mit derartigen Abmessungen eine gute Funktion aufweist und auch über längere Zeit eine Ablagerung von Partikeln verhindert, insbesondere von Rußpartikeln. Es hat sich ferner gezeigt, daß für eine wirkungsvolle Kühlung eine Höhe der von den Aussparungen (38) und den Blechen (34, 35) oder den Abdeckblechen (39, 40) gebildeten Kanäle von etwa 1,5 mm für eine wirkungsvolle Kühlung ausreicht.

Bei einer abgewandelten Ausführungsform sind die Laschen (21, 22) jeweils aus den die Kanalhöhe überbrückenden Abschnitten der Turbulenzeinlagen (20) aufgestellt, so daß es möglich ist, diese beidseits von jedem Kanal anzuordnen. Ebenso können alternativ oben und unten in jedem Kanal derartige Laschen vorgesehen sein.

## Patentansprüche

1. Abgaswärmetauscher zum Kühlen von Abgas eines Kraftfahrzeugmotors mit einer geschlossenen Strömungsführung für das Abgas aus zwischen einer Zuführung und einer Abführung für das Abgas angeordneten, scheibenförmigen Wärmetauschelementen (12, 33), die von einem Kühlmedium umströmt sind und die jeweils aus zwei Blechen (13; 34, 35) zusammengefügt sind, zwischen denen wenigstens eine Turbulenzeinlage (20) angeordnet ist,
**dadurch gekennzeichnet, daß**
die Turbulenzeinlage (20) schräg zur Strömungsrichtung des Abgases verlaufende, von einem Blech des Wärmetauschelementes (12, 33) aufragende Laschen (21, 22) bildet, die in Abstand von dem gegenüberliegenden Blech des Wärmetauschelementes enden, die paarweise angeordnet sind und die in Strömungsrichtung des Abgases auseinanderlaufen.

2. Abgaswärmetauscher nach Anspruch 1, dadurch gekennzeichnet, daß die Laschen (21, 22) mit Winkeln zwischen 15° und 40° schräg zur Strömungsrichtung des Abgases ausgerichtet sind.

3. Abgaswärmetauscher nach Anspruch 1 oder 2, dadurch gekennzeichnet, daß als Turbulenzeinlage (20) ein quer zur Strömungsrichtung etwa mäanderförmig gebogenes Blech vorgesehen ist, das das scheibenförmige Wärmetauschelement (12) in mehrere in Strömungsrichtung verlaufende Kanäle unterteilt.

4. Abgaswärmetauscher nach Anspruch 3, dadurch gekennzeichnet, daß die Laschen (21, 22) jeweils aus einer an einem der Bleche des Wärmetauscherelementes (12, 33) anliegenden Fläche aufgestellt sind.

5. Abgaswärmetauscher nach einem der Ansprüche 1 bis 4, dadurch gekennzeichnet, daß die keine augestellten Laschen (21, 22) aufweisenden Bereiche der Turbulenzeinlagen (20) mit Aussparungen (41) versehen sind.

6. Abgaswärmetauscher nach einem der Ansprüche 1 bis 5, dadurch gekennzeichnet, daß die Höhe der Laschen (21, 22) etwa ein Viertel bis etwa die Hälfte der Höhe des jeweiligen Kanals beträgt.

7. Abgaswärmetauscher nach einem der Ansprüche 1 bis 6, dadurch gekennzeichnet, daß zwischen den benachbarten scheibenförmigen Wärmetauschelementen (12) Wellrippen (19) oder Stegrippen angeordnet sind.

8. Abgaswärmetauscher nach Anspruch 7, dadurch gekennzeichnet, daß die Wellrippen (19) oder Stegrippen mit aufgestellten, schräg zur Strömungsrichtung ausgerichteten Laschen versehen sind.

9. Abgaswärmetauscher nach einem der Ansprüche 1 bis 8, dadurch gekennzeichnet, daß die scheibenförmigen Wärmetauschelemente (33) jeweils zwei parallele Bleche (34, 35) aufweisen, deren Ränder mittels Randleisten (36) auf Abstand gehalten sind und die zwischen sich jeweils paarweise angeordnete Laschen (21, 22) bildende Turbulenzeinlagen (20) aufnehmen.

10. Abgaswärmetauscher nach Anspruch 9, dadurch gekennzeichnet, daß zwischen den scheibenförmigen Wärmetauschelementen (33) jeweils eine Platte (37) angeordnet ist, die mit im wesentlichen parallel zueinander verlaufenden, streifenförmigen Aussparungen (28) versehen sind, die mit den Blechen (34, 35) der Wärmetauschelemente (33) Führungskanäle für ein flüssiges Kühlmedium bilden.

## Claims

1. An exhaust gas heat exchanger for cooling exhaust gas from an internal combustion engine with a closed flow guidance system for the exhaust gas comprising disc-shaped heat exchanger elements (12, 33) positioned between an inlet line and an outlet line for the exhaust gas around which a cooling agent flows and which are composed oftwo joined plates (13; 34, 35) between which is positioned at least one turbulence insert (20),
**characterised in that**
the turbulence insert (20) forms brackets (21, 22) which run at an angle to the direction of flow of the exhaust gas and protrude from one of the plates ofthe heat exchanger element (12, 33), which end at a distance from the opposite plate on the heat exchanger element, which are positioned in pairs and which move apart from each other in the direction of flow of the exhaust gas.

2. An exhaust gas heat exchanger in accordance with Claim 1,
**characterised in that**
the brackets (21, 22) are positioned at angles of between 15° and 40° to the direction of flow of the exhaust gas.

3. An exhaust gas heat exchanger in accordance with Claim 1 or 2,
**characterised in that**
a plate bent at right angles to the direction of flow in an approximately meander-shaped form is provided as the turbulence insert (20) which divides the disc-shaped heat exchanger element (12) into several channels running in the direction of flow.

4. An exhaust gas heat exchanger in accordance with Claim 3,
**characterised in that**
the brackets (21, 22) are mounted on a surface adjacent to one of the plates of the heat exchanger element (12, 33).

5. An exhaust gas heat exchanger in accordance with one of Claims 1 to 4,
**characterised in that**
the areas ofthe turbulence inserts (20) which do not have brackets (21, 22) mounted on them are provided with recesses (41).

6. An exhaust gas heat exchanger in accordance with one of Claims 1 to 5,
**characterised in that**
the height ofthe brackets (21, 22) is approximately a quarter to halfthe height ofthe corresponding channel.

7. An exhaust gas heat exchanger in accordance with one of Claims 1 to 6,
**characterised in that**
corrugated ribs (19) or parallel ribs are positioned between the neighbouring disc-shaped heat exchanger elements (12).

8. An exhaust gas heat exchanger in accordance with Claim 7,
**characterised in that**
the corrugated ribs (19) or parallel ribs are provided with brackets which run at an angle to the direction of flow.

9. An exhaust gas heat exchanger in accordance with one of Claims 1 to 8,
**characterised in that**
the disk-shaped heat exchanger elements (33) each have two parallel plates (34, 35) the edges of which are kept at a distance by means of edge strips (36) and which take between them the pairs ofbrackets (21, 22) which form turbulence inserts (20).

10. An exhaust gas heat exchanger in accordance with Claim 9,
**characterised in that**
a plate (37) is positioned between the disc-shaped heat exchanger elements (33) which are provided with strip-shaped recesses (28) running essentially parallel to one another which, together with the plates (34, 35) ofthe heat exchanger elements (33), form guide channels for a liquid coolant.

## Revendications

1. Echangeur de chaleur pour gaz d'échappement destiné au refroidissement des gaz d'échappement d'un moteur de véhicule automobile, comprenant un canal de guidage du flux en circuit fermé pour les gaz d'échappement, composé d'éléments d'échange de chaleur (12, 33) en forme de plaque, disposés entre une arrivée et un départ des gaz d'échappement, qui sont léchés par un fluide de refroidissement et qui sont composés chacun de deux tôles (13 ; 34, 35) entre lesquelles est disposée au moins une insertion de turbulence (20),
caractérisé
en ce que l'insertion de turbulence (20) forme des barrettes (21, 22) en saillie sur une tôle de l'élément d'échange de chaleur (12, 33), qui s'étendent obliquement à la direction de l'écoulement flux des gaz d'échappement, qui se terminent à distance de la tôle opposée de l'élément d'échange de chaleur, qui sont disposées par paires et qui s'écartent l'une de l'autre dans le sens de l'écoulement des gaz d'échappement.

2. Echangeur de chaleur pour gaz d'échappement selon la revendication 1, caractérisé en ce que les barrettes (21, 22) sont orientées obliquement à la direction de l'écoulement des gaz d'échappement, selon des angles compris entre 15° et 40°.

3. Echangeur de chaleur pour gaz d'échappement selon la revendication 1 ou 2, caractérisé en ce qu'il est prévu comme insertion de turbulence (20) une tôle pliée à peu près en méandres transversalement à la direction de l'écoulement, qui divisent l'élément d'échange de chaleur (12) en forme de plaque en plusieurs canaux s'étendant dans la direction de l'écoulement.

4. Echangeur de chaleur pour gaz d'échappement selon la revendication 3, caractérisé en ce que les barrettes (21, 22) sont en saillie sur une surface appliquée contre une des plaques de l'élément d'échange de chaleur (12, 33).

5. Echangeur de chaleur pour gaz d'échappement selon une des revendications 1 à 4, caractérisé en ce que les régions des insertions de turbulence (20) qui ne présentent pas de barrettes (21, 22) en saillie sont munies d'évidements (41).

6. Echangeur de chaleur pour gaz d'échappement selon une des revendications 1 à 5, caractérisé en ce que la hauteur des barrettes (21, 22) représente d'environ un quart à environ la moitié de la hauteur du canal respectif.

7. Echangeur de chaleur pour gaz d'échappement selon une des revendications 1 à 6, caractérisé en ce qu'entre les éléments d'échange de chaleur (12) en forme de plaque adjacents, sont disposées des nervures ondulées (19) ou des nervures entretoises.

8. Echangeur de chaleur pour gaz d'échappement selon la revendication 7, caractérisé en ce que les nervures ondulées (19) ou nervures entretoises sont munies de barrettes en saillie orientées obliquement à la direction de l'écoulement.

9. Echangeur de chaleur pour gaz d'échappement selon une des revendications 1 à 8, caractérisé en ce que les éléments d'échange de chaleur en forme de plaques (33) présentent chacun deux tôles parallèles (34, 35) dont les bords sont maintenus à écartement au moyen de réglettes marginales (36) et qui reçoivent entre elles des insertions de turbulence (20) formant des barrettes (21, 22) disposées par paires.

10. Echangeur de chaleur pour gaz d'échappement selon la revendication 9, caractérisé en ce que, dans chaque intervalle entre deux éléments d'échange de chaleur (33) en forme de plaquette, est disposé un panneau (37) qui est muni d'évidements (38) en forme de stries, s'étendant sensiblement parallèlement entre eux et qui forment, avec les tôles (34, 35) des éléments d'échange de chaleur (33) des canaux de guidage pour un milieu de refroidissement liquide.
